(19) Europäisches Patentamt
European Patent Office
Office européen des brevets

(11) EP 0 902 810 B1

(12) EUROPÄISCHE PATENTSCHRIFT

(45) Veröffentlichungstag und Bekanntmachung des Hinweises auf die Patenterteilung:
**22.01.2003 Patentblatt 2003/04**

(21) Anmeldenummer: **97925012.3**

(22) Anmeldetag: **28.05.1997**

(51) Int Cl.[7]: **C08L 69/00**, C08L 25/12
// (C08L69/00, 25:12, 51:04, 33:12)

(86) Internationale Anmeldenummer:
**PCT/EP97/02791**

(87) Internationale Veröffentlichungsnummer:
**WO 97/045484 (04.12.1997 Gazette 1997/52)**

# (54) THERMOPLASTISCHE FORMMASSEN AUF BASIS VON POLYCARBONATEN UND STYROL/ACRYLNITRILPOLYMERISATEN, DIE ZUR VERBESSERUNG IHRER EIGENSCHAFTEN COPOLYMERISATE AUF ALKYL(METH)ACRYLAT-BASIS ENTHALTEN

THERMOPLASTIC MOULDED MATERIALS BASED ON POLYCARBONATES AND STYRENE/ACRYLONITRILE POLYMERS WHICH CONTAIN COPOLYMERS BASED ON ALKYL(METH)ACRYLATE TO IMPROVE THEIR PROPERTIES

MATIERES MOULABLES THERMOPLASTIQUES A BASE DE POLYCARBONATES ET DE POLYMERES STYRENE/ACRYLONITRILE CONTENANT DES COPOLYMERES A BASE D'ALKYL(METH)ACRYLATE POUR AMELIORER LEURS PROPRIETES

(84) Benannte Vertragsstaaten:
**AT BE DE ES FR GB IT NL**

(30) Priorität: **30.05.1996 DE 19621733**
**30.05.1996 DE 19621731**

(43) Veröffentlichungstag der Anmeldung:
**24.03.1999 Patentblatt 1999/12**

(73) Patentinhaber: **BASF AKTIENGESELLSCHAFT**
**67056 Ludwigshafen (DE)**

(72) Erfinder:
- **GÜNTHERBERG, Norbert**
**D-67346 Speyer (DE)**
- **WEBER, Martin**
**D-67487 Maikammer (DE)**

(74) Vertreter: **Kinzebach, Werner, Dr. et al**
**Reitstötter, Kinzebach & Partner,**
**Postfach 21 11 60**
**67011 Ludwigshafen (DE)**

(56) Entgegenhaltungen:
**EP-A- 0 356 979**
**EP-A- 0 522 314**
**EP-A- 0 601 473**
**DE-A- 3 430 689**
**DE-A- 4 211 061**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 902 810 B1

Printed by Jouve, 75001 PARIS (FR)

## Beschreibung

Die vorliegende Erfindung betrifft thermoplastische Formmassen, auf Basis von Polycarbonaten und Styrol/Acrylnitrilpolymerisaten, die zur Verbesserung ihrer Eigenschaften Copolymerisate auf Alkyl(meth)acrylatbasis enthalten.

Thermoplastische Mischungen aus Polycarbonaten, kautschukartigen Pfropfcopolymerisaten und Styrolcopolymerisaten sind als PC/ABS- bzw. PC/ASA-Blends bekannt und finden aufgrund ihres Eigenschaftsprofils in den verschiedensten Bereichen Verwendung, beispielsweise als hochbeanspruchbare Formteile im Fahrzeugbau oder für Haushaltsgeräte, Elektrogeräte, Büromaschinen. Je nach Anforderung können solche Formmassen modifiziert werden. Aus der DE-OS 42 11 061 sind Polymermischungen dieses Typs bekannt, die Polyamide als weiteren polymeren Bestandteil enthalten. Auch können solche Polymermischungen eine flammfeste Ausrüstung besitzen (vgl. DE-OS 40 34 336).

Zur Erzielung eines ausgewogenen Eigenschaftsprofils werden diesen Mischungen gegebenenfalls weitere Additive auf Polymerbasis zugesetzt. Hierdurch können jedoch einzelne Eigenschaften des gewünschten Eigenschaftsprofils ungünstig beeinflußt werden. Beispielsweise besteht die Gefahr einer partiellen gegenseitigen Unverträglichkeit der Polymere, was sich in einem Zähigkeitsverlust auswirkt. Darüber hinaus kann es zu einer Verschlechterung der Verarbeitungsstabilität oder zu einer verringerten Wärmebeständigkeit kommen.

Die EP-A-135 492 beschreibt ABS/PC-Blends mit Terpolymeren auf der Basis von Styrol/Maleinsäureanhydrid (S/MSA), die in untergeordnetem Maße $C_1$-$C_3$-Alkylmethacrylate einpolymerisiert enthalten. Diese Blends weisen gegenüber solchen Blends, die S/MSA-Copolymere enthalten, eine bessere Schlagzähigkeit auf. Blends mit hohem MSA-Anteil neigen jedoch bei ungünstigen Verarbeitungsbedingungen zu Oberflächendefekten. Die EP-A-135 493 beschreibt ähnliche Polymermischungen, denen 1-30 Gew.-% eines Polyetherpolyester-Blockcopolymeren zugesetzt werden.

Die EP-A 455 116 beschreibt Polymermischungen, die 50 bis 90 Gew.-% Polymethylmethacrylate, 5 bis 40 Gew.-% Copolymere mit Butadien als Zähphasenbestandteil und 5 bis 40 Gew.-% Polycarbonate enthalten. Der Polycarbonatanteil bewirkt eine Verbesserung der Zähigkeit und der Wärmeformbeständigkeit gegenüber reinen Polymethacrylat/Kautschuk-Mischungen.

Die DE-OS 33 25 702 beschreibt Polycarbonat/Kautschukmischungen, denen zur Verbesserung der Schlagzähigkeit 0,1 bis 15 Gew.-% eines niedermolekularen Polymers mit sauren Gruppen zugesetzt wurde.

Die EP-A 210 510 beschreibt thermoplastische Formmassen, enthaltend 20 bis 80 Gew.-% eines thermoplastischen Polycarbonats, 10 bis 60 Gew.-% wenigstens eines Pfropfkautschuks und 10 bis 70 Gew.-% eines Copolymeren vom SAN-Typ, das eine niedrige Grenzviskosität (2-10 ml/g) aufweist. Hierdurch wird die Fließfähigkeit der thermoplastischen Formmassen verbessert.

Die DE-OS 35 14 185 beschreibt thermoplastische Formmassen, die 20 bis 80 Gew.-% eines Polycarbonats, 10 bis 60 Gew.-% Pfropfkautschuke und 10 bis 70 Gew.-% wenigstens zweier verschiedener Copolymerisate vom SAN-Typ, von denen eines Methylmethacrylat als Hauptbestandteil enthält, umfassen. Die Massen weisen gute Zähigkeit, Thermostabilität und Wärmeformbeständigkeit auf. Über die Verarbeitungsstabilität wird jedoch nichts ausgesagt.

Aufgabe der Erfindung war die Bereitstellung thermoplastischer Formmassen auf der Basis von Polycarbonaten, kautschukartigen Pfropfcopolymerisaten und Styrol/Acrylnitrilcopolymerisaten, die eine bessere Verarbeitungsstabilität aufweisen, ohne daß andere Eigenschaften, wie beispielsweise Zähigkeit negativ beeinflußt werden.

Es wurde nun überraschenderweise gefunden, daß Formmassen, die neben Polycarbonaten (Komponente A), kautschukartigen Pfropfcopolymerisaten (Komponente B) und thermoplastischen Copolymerisaten auf Styrol/Acrylnitrilbasis (Komponenten C+D) eine relativ geringe Menge eines Copolymerisats aus $e_1$) Alkylmethacrylaten, $e_2$) Maleinsäure(anhydrid), Fumarsäure oder Maleinimid und $e_3$) Vinylaromaten (Komponente E) und gegebenenfalls einer polymeren, OH-Gruppen-haltigen Verbindung (Komponente F) enthalten, sich gegenüber Formmassen ohne die Zusätze E und F durch bessere mechanische Eigenschaften und höhere Verarbeitungsstabilität auszeichnen.

Gegenstand der vorliegenden Erfindung sind daher thermoplastische Formmassen, enthaltend als wesentliche Komponenten

A) 10 bis 90,9 Gew.-% mindestens eines aromatischen Polycarbonats,

B) 5 bis 30 Gew.-% mindestens eines Propfcopolymerisats, das aufgebaut ist aus

$b_1$) 20 bis 80 Gew.-% einer Pfropfgrundlage aus mindestens einem kautschukelastischen Polymer mit einer Glastemperatur unterhalb von 0°C und
$b_2$) 20 bis 80 Gew.-% einer Pfropfauflage mit einer Glastemperatur oberhalb 50°C, die aus zwei Monomeren $b_{21}$) und $b_{22}$) aufgebaut ist,

C) 2 bis 70 Gew.-% mindestens eines thermoplastischen Copolymerisats aus

$c_1$) 50 bis 90 Gew.-% Styrol und
$c_2$) 10 bis 50 Gew.-% Acrylnitril, $C_1$-$C_8$-Alkyl(meth)acrylat oder deren Mischungen

mit einer Glastemperatur oberhalb von 50°C und einer Viskositätszahl im Bereich von 40 bis 160 $cm^3/g$,

D) 2 bis 70% Gew.-% eines vom Copolymer C) verschiedenen thermoplastischen Copolymerisats, das

$d_1$) 50 bis 99 Gew.-% Styrol, substituierte Styrole der allgemeinen Formel I

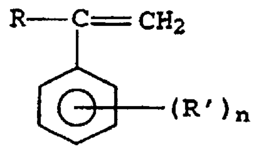

(I)

in der R für einen $C_1$-$C_8$-Alkylrest oder ein Wasserstoffatom steht, R' für einen $C_1$-$C_8$-Alkylrest steht und n den Wert 0, 1, 2 oder 3 annimmt, oder deren Mischungen sowie
$d_2$) 1 bis 50 Gew.-% Acrylnitril, Methacrylnitril, Maleinsäureanhydrid, Maleinimid, das gegebenenfalls am Stickstoffatom eine $C_1$-$C_8$-Alkylgruppe oder $C_6$-$C_{20}$-Arylgruppe aufweist, $C_1$-$C_8$-Alkyl(meth)acrylat, (Meth)acrylamid, $C_1$-$C_8$-Alkylvinylether oder deren Mischungen einpolymerisiert enthält,

E) 0,1 bis 25 Gew.-% wenigstens eines Copolymerisats, aufgebaut aus

$e_1$) 50 bis 99 Gew.-% einer Mischung aus

$e_{11}$) 80 bis 100 Gew.-% mindestens eines $C_1$-$C_{10}$-Alkylmethacrylats und/oder $C_5$-$C_8$-Cycloalkylmethacrylats und
$e_{12}$) bis zu 20 Gew.-% mindestens eines $C_1$-$C_{10}$-Alkylacrylats,

$e_2$) 0,5 bis 20 Gew.-% Maleinsäure, Maleinsäureanhydrid, Fumarsäure, Itaconsäure oder Maleinimid, das gegebenenfalls am Stickstoff eine $C_1$-$C_8$-Alkyl- oder $C_6$-$C_{20}$-Arylgruppe aufweist, oder deren Mischungen und
$e_3$) 0,5 bis 40 Gew.-% mindestens eines Vinylaromaten, der gegebenenfalls am aromatischen Kern mit einem oder zwei $C_1$-$C_4$-Alkylresten substituiert ist,

F) 0 bis 12,5 Gew.-% wenigstens einer polymeren, OH-Gruppen-haltigen Verbindung,

G) 0 bis 50 Gew.-% Additive, Hilfstoffe und/oder faser- oder teilchenförmige Füllstoffe oder deren Mischungen,

wobei die Gewichtsanteile der Komponenten E und F zusammen maximal 25 Gew.-% ausmachen und sich die Gewichtsteile der Komponenten A bis G zu 100 Gew.-% addieren.

Außerdem betrifft die Erfindung die Verwendung dieser thermoplastischen Formmassen zur Herstellung von Formkörpern, einschließlich Fasern und Folien sowie die aus den thermoplastischen Formmassen erhältlichen Formkörper, Halbzeuge oder Folien.

Unter $C_1$-$C_8$- bzw. $C_1$-$C_{10}$-Alkylgruppen versteht man im folgenden lineare oder verzweigte, vorzugsweise lineare Alkylgruppen. Insbesondere handelt es sich um $C_1$-$C_6$-Alkylgruppen. Beispiele für Alkylgruppen sind Methyl, Ethyl, n-Propyl, i-Propyl, n-Butyl, 2-Butyl, i-Butyl, t-Butyl, n-Hexyl und 2-Ethylhexyl. Beispiele für $C_1$-$C_6$-Alkylen- bzw. $C_2$-$C_6$-Alkylidengruppen sind Methylen, Ethylen, Ethyliden, 1-Methylethylen, 1,3-Propylen, 1,1-Propyliden, 2,2-Propyliden, 2-Methylpropyliden, n-Butylen, 2-Methylbutylen, 1,1-Butyliden, 2,2-Butyliden, 1,1-Pentyliden, 2,2-Pentyliden, 3,3-Pentyliden. Unter $C_3$-$C_{10}$-Cycloalkylgruppen sind Cycloalkylgruppen zu verstehen, die gegebenenfalls als Substituenten eine oder mehrere $C_1$-$C_4$-Alkylgruppen tragen. Beispiele hierfür sind Cyclopropyl, Cyclobutyl, Cyclopentyl, Methylcyclopentyl, Cyclohexyl, Methyl-, Dimethyl-, Trimethylcyclohexyl. Beispiele für $C_3$-$C_{10}$-Cycloalkylen- bzw. $C_3$-$C_{10}$-Cycloalkyliden sind 1,1- bzw. 1,2-Cyclopropylen, 1,1-, 1,2- und 1,3-Cyclobutylen, 1,1-, 1,2-und 1,3-Cyclopentylen, 1,1-, 1,2-, 1,3- und 1,4-Cyclohexylen und deren Methyl oder Ethyl substituierten Derivate wie beispielsweise 2,2,4-Trimethyl-1,1-cyclohexylen. Unter $C_6$-$C_{20}$-Arylgruppen versteht man insbesondere Phenyl oder Naphthylgruppen, die gegebenenfalls eine oder mehrere $C_1$-$C_4$-Alkylgruppen tragen.

Als Komponente A) enthalten die erfindungsgemäßen thermoplastischen Formmassen 10 bis 90,9 Gew.-%, vorzugsweise 20 bis 86 Gew.-%, insbesondere 25 bis 70 Gew.-%, bezogen auf das Gesamtgewicht der Formmasse, mindestens eines Polycarbonats.

Geeignete Polycarbonate sind beispielsweise solche auf Basis von Bisphenolen der allgemeinen Formel II,

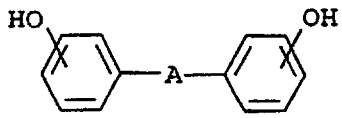

(II)

worin A für eine Einfachbindung, -S-, $-SO_2-$, eine $C_1$-$C_6$-Alkylen-, eine $C_2$-$C_6$-Alkyliden-, eine $C_3$-$C_{10}$-Cycloalkylen- oder eine $C_3$-$C_{10}$-Cycloalkylidengruppe steht.

Zu den bevorzugten Bisphenolen der Formel II zählen 4,4'-Dihydroxybiphenyl, 4,4'-Dihydroxydiphenylether, 4,4'-Dihydroxydiphenylsulfid, 4,4'-Dihydroxydiphenylsulfon, 2,2-Bis-(4-hydroxyphenyl)propan (Bisphenol A), 2,4-Bis-(4-hydroxyphenyl)-2-methylbutan, 2,2-Bis-(4-hydroxyphenyl)pentan, 1,1-Bis-(4-hydroxyphenyl)cyclohexan, 1,1-Bis-(4,4'-hydroxyphenyl)-2,2,4-trimethylcyclohexan. Besonders bevorzugt sind 2,2-Bis-(4-hydroxyphenyl)-propan und 1,1-Bis-(4-hydroxyphenyl)cyclohexan.

Sowohl Homopolycarbonate als auch Copolycarbonate eignen sich als Komponente A). Homo- und Copolycarbonate des Bisphenol A werden bevorzugt. Besonders bevorzugt werden Copolycarbonate, die neben Bisphenol A bis zu 30 mol% der vorstehend genannten Dihydroxyverbindungen einkondensiert enthalten.

Die geeigneten Polycarbonate können in bekannter Weise verzweigt sein und zwar vorzugsweise durch den Einbau von 0,05 bis 2,0 mol-%, bezogen auf die Summe der eingesetzten Bisphenole, von Verbindungen, mit mindestens drei phenolischen OH-Gruppen.

Weiterhin können die als Komponente A) geeigneten Polycarbonate an den aromatischen Einheiten ein- bis dreifach mit Halogenatomen, bevorzugt mit Chlor und/oder Brom, substituiert sein. Besonders bevorzugt sind jedoch halogenfreie Verbindungen.

Als besonders geeignet haben sich Polycarbonate erwiesen, die relative Viskositäten $\eta_{rel}$ von 1,10 bis 1,50, insbesondere von 1,25 bis 1,40 aufweisen (bei 25°C als 0,5 gew.-%ige Lösung in Dichlormethan). Dies entspricht mittleren Molekulargewichten $M_W$ (Gewichtsmittelwert) von 10000 bis 200000, insbesondere von 20000 bis 80000.

Die Bisphenole der allgemeinen Formel II sind an sich bekannt oder nach bekannten Verfahren herstellbar.

Die Herstellung der Polycarbonate kann beispielsweise durch Umsetzung der Bisphenole mit Phosgen nach dem Phasengrenzflächenverfahren oder in homogener Phase (dem sogenannten Pyridinverfahren) erfolgen, wobei das gewünschte Molekulargewicht durch eine entsprechende Menge an bekannten Kettenabbrechern eingestellt wird (bezüglich polydiorganosiloxanhaltigen Polycarbonaten siehe beispielsweise DE-OS 33 34 782).

Geeignete Kettenabbrecher sind beispielsweise Phenol, p-tert.-Butylphenol aber auch langkettige Alkylphenole wie 4-(1,1,3,3-Tetramethylbutyl)phenol, gemäß DE-OS 28 42 005 oder Monoalkylphenole oder Dialkylphenole mit insgesamt 8 bis 20 C-Atomen in den Alkylsubstituenten gemäße DE-A 35 06 472, wie beispielsweise p-Nonylphenyl, 3,5-di-tert.-Butylphenol, p-tert.-Octylphenol, p-Dodecylphenol, 2-(3,5-Dimethylheptyl)phenol und 4-(3,5-Dimethylheptyl)phenol.

Weitere geeignete Polycarbonate sind solche auf Basis von 2,6-Dihydroxynaphthalin, Hydrochinon oder Resorcin.

Als Komponente B) enthalten die erfindungsgemäßen thermoplastischen Formmassen 5 bis 30 Gew.-%, vorzugsweise 5 bis 25 Gew.-%, insbesondere 8 bis 20 Gew.-%, bezogen auf das Gesamtgewicht der Formmasse, wenigstens eines Pfropfcopolymerisats, aufgebaut aus

$b_1$) 20 bis 80 Gew.-%, vorzugsweise 50 bis 70 Gew.-% einer Pfropfgrundlage aus einem kautschukelastischen Polymeren mit einer Glastemperatur unterhalb von 0°C

$b_2$) 20 bis 80 Gew.-%, vorzugsweise 30 bis 50 Gew.-% einer Pfropfauflage mit einer Glastemperatur oberhalb 50°C, das vorzugsweise aufgebaut ist aus

$b_{21}$) 50 bis 90 Gew.-%, vorzugsweise 60 bis 80 Gew.-% Styrol oder substituierten Styrolen der allgemeinen Formel I,

$b_{22}$) 10 bis 50 Gew.-%, vorzugsweise 20 bis 40 Gew.-% Acrylnitril, Methacrylnitril, Methylmethacrylat, Maleinsäureanhydrid, Maleinimid, das gegebenenfalls am Stickstoffatom eine $C_1$-$C_8$-Alkylgruppe oder eine $C_6$-$C_{20}$-Arylgruppe aufweist, (Meth)acrylamid, $C_1$-$C_8$-Alkylvinylether oder deren Mischungen.

Für die Pfropfgrundlage $b_1$) kommen Polymerisate in Frage, deren Glasübergangstemperatur unterhalb von

0°C, vorzugsweise unterhalb von -20°C liegt. Hierzu zählen z.B. Naturkautschuk, Synthesekautschuk auf der Basis von konjugierten Dienen, gegebenenfalls mit anderen Comonomeren, sowie Elastomere auf der Basis von $C_1$-$C_{10}$-Alkylestern der Acrylsäure, die gegebenenfalls weitere Comonomere enthalten können.

Pfropfgrundlagen $b_1$) auf der Basis von Butadien, im folgenden als $b_{1a}$) bezeichent, sind aufgebaut aus

$b_{11a}$) 50 bis 100 Gew.-%, vorzugsweise 60 bis 100 Gew.-%, insbesondere 70 bis 100 Gew.-% Butadien und/oder Isopren und

$b_{12a}$) bis zu 50 Gew.-%, vorzugsweise bis zu 40 Gew.-%, insbesondere 10 bis 30 Gew.-% copolymerisierbaren, ethylenisch ungesättigten Monomeren z.B. $C_1$-$C_8$-Alkylvinylether, $C_1$-$C_{10}$-Alkylacrylaten, Styrol, Acrylnitril, Methacrylnitril und/oder Methylmethacrylat oder deren Mischungen.

Besonders bevorzugte Pfropfgrundlagen $b_{1a}$) sind Polybutadien (vgl. DE-OS 14 20 775 und DE-OS 14 95 089) und Copolymerisate aus Polybutadien und Styrol (vgl. GB-A 6 49 166).

Weiterhin kommen Pfropfgrundlagen $b_1$) auf Acrylatbasis (Pfropfgrundlage $b_{1b}$) in Betracht, die aufgebaut sind aus

$b_{11b}$) 50 bis 99,9 Gew.-%, vorzugsweise 55 bis 99 Gew.-%, insbesondere 60 bis 90 Gew.-% mindestens eines $C_1$-$C_{10}$-Alkylacrylates, vorzugsweise Ethylacrylat, tert.-, iso-, n-Butylacrylat und 2-Ethylhexylacrylat, insbesondere die beiden letztgenannten, speziell n-Butylacrylat als alleiniges Alkylacrylat,

$b_{12b}$) 0 bis 49,9 Gew.-%, vorzugsweise 5 bis 44,9 Gew.-%, insbesondere 10 bis 39,9 Gew.-%, eines weiteren copolymerisierbaren, ethylenisch ungesättigten Monomeren, wie Butadien, Isopren, Styrol, Acrylnitril, Methacrylnitril, Methylmethacrylat und/oder $C_1$-$C_8$-Alkylvinylether (z.B. Methylvinylether, Ethylvinylether, Propylvinylether),

$b_{13b}$) 0,1 bis 5 Gew.-%, vorzugsweise 1 bis 4 Gew.-% eines copolymerisierbaren, polyfunktionellen, vorzugsweise bi- oder trifunktionellen, die Vernetzung bewirkenden Monomeren. Als solche bi- oder polyfunktionellen Vernetzungsmonomeren $b_{13b}$) eignen sich Monomere, die vorzugsweise zwei, gegebenenfalls auch drei oder mehr, zur Copolymerisation befähigte ethylenische Doppelbindungen enthalten, die nicht konjugiert sind. Geeignete Vernetzungsmonomere sind beispielsweise Divinylbenzol, Diallylmaleat, Diallylfumarat, Triallylcyanurat oder Triallylisocyanat. Als besonders geeignet hat sich der Acrylsäureester des Tricyclodecenylalkohols erwiesen (vgl. DE-OS 12 60 135).

Auch derartige Pfropfgrundlagen sind an sich bekannt und in der Literatur beschrieben, beispielsweise in DE-OS 31 49 358.

Erfindungsgemäß können die Formmassen sowohl Pfropfcopolymerisate mit einer Pfropfgrundlage auf Polybutadienbasis $b_{1a}$) oder auf Alkylacrylatbasis $b_{1b}$) oder Mischungen zweier Pfropfcopolymerisate mit den Pfropfgrundlagen $b_{1a}$) und $b_{1b}$) enthalten. Bei Verwendung von Mischungen liegt das Verhältnis vorzugsweise $b_{1a}$) : $b_{1b}$) im Bereich von 4:1 bis 1:4, insbesondere 1:2 bis 2:1.

Bevorzugte Pfropfauflagen $b_2$) sind diejenigen, in denen $b_{21}$) Styrol oder $\alpha$-Methylstyrol bedeutet. Als bevorzugte MonomerenGemische $b_{21}$) und $b_{22}$) werden vor allem Styrol und Acrylnitril, $\alpha$-Methylstyrol und Acrylnitril, Styrol, Acrylnitril und Methylmethacrylat oder Styrol und Maleinsäureanhydrid eingesetzt. Die Pfropfauflagen sind durch Copolymerisation der Komponenten $b_{21}$) und $b_{22}$) erhältlich. Sie weisen üblicherweise eine Glastemperatur oberhalb 50°C auf.

Wenn das Pfropfcopolymerisat B) eine Pfropfgrundlage $b_{1a}$) enthält, die aus Polybutadienpolymeren aufgebaut ist, spricht man von ABS-Kautschuk.

Solche Pfropfgrundlagen $b_{1a}$) können hergestellt werden, indem $b_{11a}$) und $b_{12a}$) in wäßriger Emulsion in an sich bekannter Weise bei Temperaturen von 20 bis 100°C, vorzugsweise von 50 bis 80°C, polymerisiert werden. Es können die üblichen Emulgatoren, wie Alkalisalze von Alkyl- oder Alkylarylsulfonsäuren, Alkylsulfate, Fettalkoholsulfonate, Salze höherer Fettsäuren mit 10 bis 30 Kohlenstoffatomen oder Harzseifen, verwendet werden. Vorzugsweise nimmt man die Natrium- oder Kaliumsalze von Alkylsulfonaten oder Fettsäuren mit 10 bis 18 Kohlenstoffatomen. Es ist günstig, die Emulgatoren in Mengen von 0,5 bis 5 Gew.-%, insbesondere von 0,5 bis 2 Gew.-%, bezogen auf die bei der Herstellung der Pfropfgrundlage $b_{1a}$) eingesetzten Monomere, einzusetzen. Im allgemeinen wird bei einem Wasser- und Monomeren-Verhältnis von 2:1 bis 0,7:1 gearbeitet. Als Polymerisationsinitiatoren dienen insbesondere die gebräuchlichen Persulfate, wie Kaliumpersulfat, es können jedoch auch Redox-Systeme zum Einsatz gelangen. Die Initiatoren werden im allgemeinen in Mengen von 0,1 bis 1 Gew.-%, bezogen auf die bei der Herstellung der Pfropfgrundlage $b_{1a}$) eingesetzten Monomeren, eingesetzt. Als weitere Polymerisationshilfsstoffe können die üblichen Puffersubstanzen, durch welche pH-Werte von vorzugsweise 6 bis 9 eingestellt werden - z.B. Natriumbicarbonat und Natriumpyrophosphate - dienen; ferner können 0,1 bis 3 Gew.-% eines Molekulargewichtsreglers - wie Mercaptane, Terpinole oder dimeres $\alpha$-Methylstyrol - bei der Polymerisation verwendet werden.

Die genauen Polymerisationsbedingungen, insbesondere Art, Dosierung und Menge des Emulgators, werden

innerhalb der oben angegebenen Bereiche im einzelnen so gewählt, daß der erhaltene Latex des Dienpolymerisats $b_{1a}$) einen $d_{50}$-Wert der integralen Massenverteilung (siehe unten) im Bereich von etwa 100 bis 750 nm, vorzugsweise im Bereich von 100 bis 600 nm, besitzt. Alternativ kann auch ein Emulsionspolymerisat mit mittleren Teilchengrößen im Bereich von 60-150 nm agglomeriert werden, wie dies z.B. in der DE-B 2427960 beschrieben ist. Zur Herstellung grobteiliger Kautschukdispersionen ist auch das Saatlatexverfahren geeignet.

Der $d_{50}$-Wert der Teilchengröße wird wie üblich definiert als das Gewichtsmittel der Teilchengröße, wie sie mittels einer analytischen Ultrazentifuge entsprechend der Methode von W. Scholtan und H. Lange, Kolloid-Z. und Z. -Polymere 250 (1972) Seiten 782 bis 796, bestimmt wird. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder unter einer bestimmten Größe haben. Der mittlere Teilchendurchmesser, der auch als $d_{50}$-Wert der integralen Masseverteilung bezeichnet wird, ist dabei als der Wert definiert, bei dem 50 Gewichtsprozent der Teilchen einen kleineren und 50 Gewichtsprozent der Teilchen einen größeren Durchmesser als der $d_{50}$-Wert aufweisen.

Vorzugsweise hat der Latex eine enge Teilchengrößenverteilung, d.h. der Quotient

$$Q = \frac{d_{90} - d_{10}}{d_{50}}$$

ist vorzugsweise kleiner als 0,5, insbesondere kleiner als 0,35.

Wenn die Pfropfgrundlage der Pfropfcopolymerisate B) aus den Komponenten $b_{11b}$), gegebenenfalls $b_{12b}$) und $b_{13b}$) aufgebaut ist, spricht man von ASA-Kautschuken. Ihre Herstellung ist an sich bekannt und beispielsweise in der DE-OS 28 26 925, der DE-OS 31 49 358 und der DE-OS 34 14 118 beschrieben.

Die Herstellung solcher Pfropfgrundlagen $b_{1b}$) kann in der gleichen Weise erfolgen, wie für die Pfropfgrundlagen auf Dien-Basis $b_{1a}$) beschrieben. Die genauen Polymerisationsbedingungen werden dabei so gewählt, daß der erhaltene Latex einen $d_{50}$-Wert im Bereich von 30 bis 1000 nm, bevorzugt im Bereich von 50 bis 800 nm besitzt.

In einigen Fällen haben sich Mischungen von Pfropfgrundlagen bewährt, die unterschiedliche Teilchengrößen aufweisen. Entsprechende Produkte sind in der DE-OS 28 26 925 und US 5,196,480 beschrieben. Bevorzugt werden solche Mischungen eingesetzt, in denen die eine Polymersorte Teilchengrößen von 50 bis 150 nm und die andere Teilchengrößen von 200 bis 700 nm aufweist (bimodaler Latex).

Der Aufbau der Pfropfauflage (Pfropfhülle) des Pfropfmischpolymerisats kann ein- oder mehrstufig, z.B. zwei- oder dreistufig, erfolgen. Im Falle des einstufigen Aufbaues der Pfropfhülle wird ein Gemisch der Monomeren $b_{21}$) und $b_{22}$) in dem gewünschten Gewichtsverhältnis im Bereich von 9:1 bis 1:1 in Gegenwart des Elastomeren $b_{1a}$) bzw. $b_{1b}$), in an sich bekannter Weise (vgl. z.B. DE-OS 28 26 925), vorzugsweise in Emulsion, (siehe DE-PS 12 60 135, DE-OS 32 27 555, DE-OS 31 49 357, DE-OS 31 49 358, DE-OS 34 14 118) polymerisiert.

Im Falle eines zweistufigen Aufbaus der Pfropfhülle $b_2$) macht die 1. Stufe im allgemeinen 20 bis 70 Gew.-%, vorzugsweise 25 bis 50 Gew.-%, bezogen auf die gesamte Pfropfhülle $b_2$), aus. In dieser Stufe werden vorzugsweise nur die Monomeren $b_{21}$) verwendet.

Die weiteren Stufen der Pfropfhülle macht im allgemeinen 30 bis 80 Gew.-%, insbesondere 50 bis 75 Gew.-% jeweils bezogen auf $b_2$), aus. Zu ihrer Herstellung verwendet man Mischungen aus den genannten Monomeren $b_{21}$) und den Monomeren $b_{22}$) im Gewichtsverhältnis $b_{21}$)/$b_{22}$) von im allgemeinen 9:1 bis 1:1, insbesondere 4:1 bis 7:3.

Wird die Propfcopolymerisation in Emulsion durchgeführt, kann sie im gleichen System wie die Polymerisation der Pfropfgrundlage vorgenommen werden, wobei gegebenenfalls weiterer Emulgator und/oder Initiator zugegeben werden müssen. Diese müssen mit den zur Herstellung der Pfropfgrundlage $b_1$) verwendeten Emulgatoren bzw. Initiatoren nicht identisch sein. Im übrigen gilt für die Wahl von Emulgator, Initiator und Polymerisationshilfsstoffen das bei der Herstellung der Pfropfgrundlage $b_1$) gesagte. Das aufzupfropfende Monomerengemisch kann dem Reaktionsgemisch auf einmal, absatzweise in mehreren Stufen oder vorzugsweise kontinuierlich während der Polymerisation zugegeben werden. Die Pfropfcopolymerisation wird vorteilhaft so gesteuert, daß ein Pfropfgrad von 10 bis 60 Gew.-%, vorzugsweise von 15 bis 45 Gew.-%, resultiert.

Das Pfropfcopolymerisat ($b_1 + b_2$) weist im allgemeinen eine mittlere Teilchengröße von vorzugsweise 50 bis 1000 nm, insbesondere von 100 bis 700 nm und speziell 150 bis 600 nm ($d_{50}$-Gewichtsmittelwert) auf. Die Bedingungen bei der Herstellung des Elastomeren $b_1$) und bei der Pfropfung werden daher vorzugsweise so gewählt, daß Teilchengrößen in diesem Bereich resultieren. Maßnahmen hierzu sind bekannt und z.B. in der DE-PS 1 260 135 und der DE-OS 28 26 925 sowie in Journal of Applied Polymer Science, Vol. 9 (1965), S. 2929 bis 2938, beschrieben.

Um möglichst zähe Produkte zu erhalten, ist es von Vorteil, eine Mischung mindestens zweier Pfropfcopolymerisate mit unterschiedlichen Teilchengrößen zu verwenden (vgl. DE-OS 28 26 925 und US 5,196,480). Vorzugsweise weist das eine Pfropfcopolymerisat $d_{50}$-Werte im Bereich von 50 bis 180 nm und das andere $d_{50}$-Werte im Bereich von 200 bis 700 nm auf. In einer besonders bevorzugten Ausführungsform werden derartige Mischungen aus zwei

Pfropfcopolymerisaten im Verhältnis 8:2 bis 2:8 verwendet. Die Herstellung solcher Pfropfcopolymerisate erfolgt vorteilhafterweise ausgehend von den oben erwähnten bimodalen Elastomersuspensionen (Bimodale Latizes). Vorzugsweise ist der chemische Aufbau der beiden Pfropfcopolymerisate derselbe, obwohl die Hülle des grobteiligeren Pfropfcopolymerisats insbesondere auch zweistufig aufgebaut werden kann. Mischungen der Komponenten A und B, wobei letztere ein grob- und ein feinteiliges Pfropfcopolymerisat aufweist, sind z.B. in der DE-OS 36 15 607 beschrieben. Mischungen aus A und B, in denen B eine zweistufige Pfropfhülle aufweist, sind in EP-A 111 260 beschrieben.

Als Komponente C) enthalten die erfindungsgemäßen thermoplastischen Formmassen 2 bis 70 Gew.-%, vorzugsweise 4,4 bis 70 Gew.-%, insbesondere 10 bis 60 Gew.-%, jeweils bezogen auf das Gesamtgewicht der Formmasse, eines thermoplastischen Copolymerisats, aufgebaut aus

$c_1$) 50 bis 90 Gew.-%, vorzugsweise 60 bis 85 Gew.-%, Styrol und
$c_2$) 10 bis 50 Gew.-%, vorzugsweise 15 bis 40 Gew.-%, Acrylnitril, $C_1$-$C_8$-Alkyl(meth)acrylat, insbesondere Methylmethacrylat, oder deren Mischungen.

Die Copolymerisate C) sind harzartig, thermoplastisch- und kautschukfrei. Bevorzugt werden Copolymerisate aus Styrol und Acrylnitril.

Die Copolymerisate C) sind an sich bekannt und lassen sich durch radikalische Polymerisation, insbesondere durch Emulsions-, Suspensions-, Lösungs- oder Massepolymerisation, vorzugsweise durch kontinuierliche Substanz- oder Lösungspolymerisation, herstellen (vgl. Kunststoffhandbuch, Bd V (Polystyrol), Karl-Hanser-Verlag München 1969, S. 118 ff.). Sie weisen Viskositätszahlen (ermittelt nach DIN 53726 bei 25°C, 0,5 Gew.-% in Dimethylformamid) im Bereich von 40 bis 160 auf. Dies entspricht mittleren Molekulargewichten $M_w$ (Gewichtsmittelwert) von 4 x $10^4$ bis 2 x $10^6$. Für die erfindungsgemäßen, thermoplastischen Formmassen eignen sich Polymerisate mit einer Glastemperatur oberhalb 50°C.

Als Komponente D) enthalten die erfindungsgemäßen Formmassen 2 bis 70 Gew.-%, vorzugsweise 4,4 bis 70 Gew.-%, insbesondere 10 bis 60 Gew.-%, bezogen auf das Gesamtgewicht der Formmasse, eines thermoplastischen Copolymerisats, das vom Copolymerisat C verschieden ist, d.h.

- das Styrol, Acrylnitril und/oder (Meth)acrylat in der gleichen Monomerzusammensetzung wie das Polymer C enthält, jedoch eine niedrigere Viskositätszahl besitzt oder
- das eine von C abweichende Monomerzusammensetzung aufweist oder
- das sich gegenüber den Polymeren aus C in der Art der Monomeren unterscheidet und das

$d_1$) 50 bis 99 Gew.-%, vorzugsweise 55 bis 90 Gew.-%, insbesondere 65 bis 85 Gew.-% Styrol, substituierte Styrole der allgemeinen Formel I, insbesondere α-Methylstyrol, oder deren Mischungen sowie
$d_2$) 1 bis 50 Gew.-%, vorzugsweise 10 bis 45 Gew.-%, insbesondere 15 bis 35 Gew.-% Acrylnitril, Methacrylnitril, $C_1$-$C_8$-Alkyl (meth)acrylat, insbesondere Methylmethacrylat, Maleinsäureanyhdrid, Maleinimid, das gegebenenfalls am Stickstoffatom eine $C_1$-$C_8$-Alkylgruppe oder $C_6$-$C_{20}$-Arylgruppe aufweist, (Meth)acrylamid, $C_1$-$C_8$-Alkylvinylether oder deren Mischungen einpolymerisiert enthält.

Auch diese Polymere sind im Prinzip bekannt und können in der für C) beschriebenen Weise hergestellt werden. Besonders bevorzugte Copolymerisate D) werden durch Copolymerisation folgender Monomerkombinationen hergestellt: Styrol mit Acrylnitril und gegebenenfalls Methylmethacrylat; α-Methylstyrol mit Acrylnitril und gegebenenfalls Methylmethacrylat; Styrol und α-Methylstyrol mit Acrylnitril und gegebenenfalls Methylmethacrylat; Styrol mit Maleinsäureanhydrid; Styrol mit Maleinimid, das gegebenenfalls am Stickstoff $C_1$-$C_8$-Alkyl- oder $C_6$-$C_{20}$-Arylgruppen trägt, und gegebenenfalls Maleinsäureanhydrid.

Die erfindungsgemäßen, thermoplastischen Formmassen weisen als Komponente E) 0,1 bis 25 Gew.-%, vorzugsweise 0,2 bis 16 Gew.-%, insbesondere 0,5 bis 8 Gew.-%, bezogen auf das Gesamtgewicht der Formmasse, eines Copolymerisats auf, das aufgebaut ist aus

$e_1$) 50 bis 99 Gew.-% einer Mischung aus

$e_{11}$) 80 bis 100 Gew.-% mindestens eines $C_1$-$C_{10}$-Alkylmethacrylats und/oder eines $C_5$-$C_8$-Cycloalkylmethacrylats und
$e_{12}$) bis zu 20 Gew.-% mindestens eines $C_1$-$C_{10}$-Alkylacrylats,

$e_2$) 0,5 bis 20 Gew.-% Maleinsäure, Maleinsäureanhydrid, Fumarsäure, Itaconsäure oder Maleinimid, das gegebenenfalls am Stickstoffatom eine $C_1$-$C_8$-Alkyl- oder $C_6$-$C_{20}$-Arylgruppen aufweist, oder deren Mischungen und
$e_3$) 0,5 bis 40 Gew.-% mindestens eines Vinylaromaten, der gegebenenfalls am aromatischen Kern mit 1, 2 oder

3 $C_1$-$C_4$-Alkylresten substituiert ist.

Bei den verwendeten Alkyl(meth)acrylaten $e_1$) handelt es sich insbesondere um Methyl(meth)acrylat, Ethyl (meth)acrylat, n-, iso-, oder tert.-Butyl(meth)acrylat, Hexyl(meth)acrylate und 2-Ethylhexyl(meth)acrylat. Geeignete Cycloalkylmethacrylate sind beispielsweise Cyclopentyl-, Cycloheptyl- und insbesondere Cyclohexylmethacrylat. Gegebenenfalls können auch Mischungen verschiedener (Meth)acrylsäureester eingesetzt werden. Vorzugsweise handelt es sich bei $e_{11}$) und $e_{12}$) um (Meth)acrylate mit gleichen Alkylgruppen. Vorzugsweise liegt der Anteil an $e_1$) in E bei 65 bis 95 Gew.-%, insbesondere bei 70 bis 80 Gew.-%. Der Anteil der Monomerkomponente $e_2$) liegt bevorzugt im Bereich von 1 bis 15 Gew.-%, insbesondere bei 5 bis 15 Gew.-%. Als Vinylaromaten $e_3$) finden insbesondere Styrol sowie $\alpha$-Methylstyrol, die gegebenenfalls mit 1 oder 2 $C_1$-$C_4$-Alkylresten substituiert sein können, Verwendung. Der Anteil der Monomerkomponente $e_3$) liegt vorzugsweise im Bereich von 1 bis 30 Gew.-%, insbesondere 5 bis 25 Gew.-%, ganz besonders 10 bis 20 Gew.-%.

Üblicherweise liegt das Molekulargewicht der Copolymere E im Bereich von 2 x $10^4$ bis $10^6$. Die Herstellung der Komponente E ist an sich bekannt. Sie wird in NL-A 6605289, DE-A 1231013, DE-A 1298272, DE-A 3631826, JP-A 85/147417 und EP-A 457147 beschrieben und wird vorzugsweise als radikalische Polymerisation in Substanz, in Lösung oder als Perlpolymerisation durchgeführt.

Die Copolymerisate können zweckmäßig in Form von handelsüblichen Produkten eingesetzt werden, beispielsweise solche mit einer Zusammensetzung von Methylmethacrylat-Styrol-Maleinsäureanhydrid im Gewichtsverhältnis 75:15:10, erhältlich unter dem Namen Degalan® HT 120 (Degussa) und Plexiglas® HW 55 (Roehm), oder solche mit einer Zusammensetzung Methylmethacrylat-$\alpha$-Methylstyrol-Maleinsäureanhydrid im Gewichtsverhältnis 77:15:8, erhältlich unter dem Namen PLEX® 8707.

Als Komponente F) können die erfindungsgemäßen, thermoplastischen Formmassen bis zu 12,5 Gew.-%, vorzugsweise 0,1 bis 10 Gew.-%, besonders bevorzugt 0,2 bis 8 Gew.-% einer polymeren, OH-Gruppenhaltigen Verbindung enthalten. Komponente E macht gemeinsam mit Komponente F bevorzugt 20 Gew.-%, insbesondere 16 Gew.-% der Formmasse aus. Ganz besonders bevorzugt verwendet man annähernd gleiche Mengen der Komponenten E und F. Als Komponente F eignen sich besonders Polykondensate aliphatischer oder aromatischer Diole oder höherwertiger Alkohole mit Epihalogenhydrinen. Bei den aliphatischen Diolen handelt es sich bevorzugt um Diole mit 2 bis 10 C-Atomen, besonders bevorzugt um Butandiol und/oder Hexandiol. Bei den aromatischen Diolen handelt es sich vorzugsweise um Bisphenole, beispielsweise um die für die Herstellung der Polycarbonate A) angegebenen Verbindungen. Bei den höherwertigen Alkoholen sind insbesondere Mannit und Glycerin zu nennen. Als Epihalogenhydrin wird vorzugsweise Epichlorhydrin eingesetzt. Besonders bevorzugte Verbindungen F) sind Kondensationsprodukte aus den bei der Herstellung der Polycarbonate A) angegebenen Bisphenole mit Epichlorhydrin. In einer besonders bevorzugten Ausführungsform der Erfindung wird ein Kondensationsprodukt aus 2,2-Di-(4-hydroxyphenyl)propan (Bisphenol A) und Epichlorhydrin, das beispielsweise unter der Bezeichnung Phenoxy® (Union Carbide Corporation) im Handel erhältlich ist, eingesetzt. Verfahren zur Herstellung derartiger Polykondensate wie auch der Ausgangsverbindungen an sich sind dem Fachmann prinzipiell bekannt.

Es können auch andere polymere, OH-Gruppen-haltige Verbindungen eingesetzt werden, sofern die Komponenten A) bis E) gegenüber der Komponente F) stabil sind.

Als Komponente G) können die erfindungsgemäßen thermoplastischen Formmassen bis zu 50 Gew.-%, insbesondere bis zu 20 Gew.-%, faser- oder teilchenförmige Füllstoffe, Additive oder Hilfsstoffe oder deren Mischungen enthalten. Dabei handelt es sich vorzugsweise um kommerziell erhältliche Produkte. Verarbeitungshilfsmittel und Stabilisatoren wie Thermo- und UV-Stabilisatoren, Schmiermittel und Antistatika werden üblicherweise in Mengen von 0,01 bis 5 Gew.-% verwendet, Verstärkungsmittel wie Kohlenstofffasern und Glasfasern hingegen in Mengen von 5 bis 40 Gew.-%, bezogen auf das Gesamtgewicht der Formmasse.

Die verwendeten Glasfasern können aus E-, A- oder C-Glas sein und sind vorzugsweise mit einer Schlichte und einem Haftvermittler ausgerüstet. Ihr Durchmesser liegt im allgemeinen zwischen 6 und 20 $\mu$m. Es können sowohl Endlosfasern (rovings) als auch Schnittglasfasern mit einer Länge von 1 bis 10 mm, vorzugsweise 3 bis 6 mm, eingesetzt werden.

Weiterhin können Füll- oder Verstärkungsstoffe, wie Glaskugeln, Mineralfasern, Whisker, Aluminiumoxidfasern, Glimmer, Quarzmehl und Wollastonit enthalten sein.

Außerdem können Metallflocken (z.B. Aluminiumflocken der Fa. Transmet Corp.), Metallpulver, Metallfasern, metallbeschichtete Füllstoffe (z.B. nickelbeschichtete Glasfasern) sowie andere Zuschlagsstoffe, die elektromagnetische Wellen abschirmen, vorhanden sein. Insbesondere kommen Al-Flocken (K 102 der Fa. Transmet) für EMI-Zwecke (electro-magnetic interference) in Betracht; ferner ist ein Abmischen dieser Masse mit zusätzlichen Kohlenstoffasern, Leitfähigkeitsruß oder nickelbeschichteten C-Fasern möglich.

Die erfindungsgemäßen Formmassen können weiterhin Additive enthalten, die für Polycarbonate, SAN-Polymerisate und Pfropfmischpolymerisate auf Basis von ABS oder ASA oder deren Mischungen typisch und gebräuchlich sind. Als solche Additive seien beispielsweise genannt: Farbstoffe, Pigmente, Antistatika, Antioxidantien und insbesondere Schmiermittel, die für die Weiterverarbeitung der Formmasse, z.B. bei der Herstellung von Formkörpern bzw. Formteilen erforderlich sind.

Die Herstellung der erfindungsgemäßen thermoplastischen Formmassen erfolgt nach an sich bekannten Verfahren durch Mischen der Komponenten. Es kann vorteilhaft sein, einzelne Komponenten vorzumischen. Auch das Mischen der Komponenten in Lösung und Entfernen des Lösungsmittels ist möglich.

Geeignete organische Lösungsmittel für die Komponenten A) bis F) und die Zusätze der Gruppe G) sind beispielsweise Chlorbenzol, Gemische aus Chlorbenzol und Methylenchlorid oder Gemische aus Chlorbenzol und aromatischen Kohlenwasserstoffen, z.B. Toluol. Das Eindampfen der Lösungsmittelgemische kann beispielsweise in Eindampfextrudern erfolgen.

Das Mischen der trockenen Komponenten A), B), C), D), E) und gegebenenfalls F) und/oder G) kann nach allen bekannten Methoden erfolgen.

Um eine homogene Formmasse zu erhalten ist eine intensive Durchmischung vorteilhaft. Hierzu sind in der Regel Mischzeiten von 0,2 bis 30 Minuten erforderlich. Übliche Mischvorrichtungen sind beispielsweise Zweischnekkenextruder, Banbury-Kneter, Brabender-Kneter, Walzenstühle oder Kalander.

Vorzugsweise geschieht dies bei Temperaturen von 200 bis 320°C durch gemeinsames Extrudieren, Kneten oder Verwalzen bis zur makroskopischen Homogenität der Formmasse, wobei die Komponenten zuvor aus der bei der Polymerisation erhaltenen Lösung oder aus der wäßrigen Dispersion isoliert werden können, aber nicht zwingend isoliert werden müssen.

Die Komponenten können jedoch auch ohne Schmelzen "kalt" vermischt werden, d.h. das pulvrige oder aus Granulaten bestehende Gemisch wird erst bei der Verarbeitung aufgeschmolzen und homogenisiert.

Die erfindungsgemäßen thermoplastischen Formmassen können nach den bekannten Verfahren der Thermoplastverarbeitung, also z.B. durch Extrudieren, Spritzgießen, Kalandrieren, Hohlkörperblasen, Pressen oder Sintern, bearbeitet werden.

Die folgenden Beispiele sollen die vorliegende Erfindung erläutern, ohne sie jedoch einzuschränken.

Beispiele

Es wurden folgende Komponenten eingesetzt:

A) Ein handelsübliches Polycarbonat auf Basis von Bisphenol A mit einer Viskositätszahl VZ = 61,4 $cm^3$/g, gemessen an einer 0,5 Gew.-%igen Lösung in Methylenchlorid bei 23°C (Makrolon® R 2800 der Bayer AG).

B) Pfropfmischpolymerisat auf Butadienbasis

Durch Polymerisation von 600 g Butadien in Gegenwart von 6 g tert.-Dodecylmercaptan, 7 g $C_{14}$-Na-Alkylsulfonat als Emulgator, 2 g Kaliumperoxodisulfat und 2 g Natriumpyrophosphat in 800 ml Wasser wird bei 65°C ein Polybutadienlatex hergestellt. Der Umsatz beträgt 98%. Es wird ein Latex erhalten, dessen mittlere Teilchengröße bei 100 nm liegt. Der erhaltene Latex wird durch Zusatz von 25 g einer Emulsion eines Copolymeren aus 96 Teilen Ethylacrylat und 4 Teilen Methacrylsäureamid mit einem Feststoffgehalt von 10 Gew.-% agglomeriert, wobei ein Polybutadienlatex mit einer mittleren Teilchengröße von 350 nm entsteht. Nach Zusetzen von 400 g Wasser, 4 g Na-$C_{14}$-Alkylsulfonat und 2 g Kaliumperoxodisulfat werden 400 g einer Mischung aus Styrol und Acrylnitril (70:30) innerhalb von 4 Stunden zugeführt. Die Polymerisation erfolgt unter Rühren des Ansatzes bei 75°C. Der Umsatz, bezogen auf Styrol-Acrylnitril ist praktisch quantitativ. Die erhaltene Pfropfkautschukdispersion wird mittels Magneslumsulfatlösung gefällt und das abgetrennte Pfropfmischpolymerisat mit destilliertem Wasser gewaschen und getrocknet.

C) Copolymerisat aus Styrol und Acrylnitril im Gewichtsverhältnis 65:35 mit einer Viskositätszahl von 60 $cm^3$/g (gemessen nach DIN 53726 an einer 0,5 gew.-%igen Lösung in Dimethylformamid bei 23°C), hergestellt durch kontinuierliche Lösungspolymerisation nach einem Verfahren wie es beispielsweise im Kunststoffhandbuch, Vieweg/Daumiller, Band V (Polystyrol), Karl-Hanser-Verlag, München 1969, Seite 124, Zeilen 12 ff., beschrieben ist.

D) Copolymerisat aus $\alpha$-Methylstyrol und Acrylnitril im Gewichtsverhältnis 70:30 mit einer Viskositätszahl von 58 $cm^3$/g (gemessen an einer 0,5 gew.-%igen Lösung in Dimethylformamid bei 23°C), hergestellt durch kontinuierliche Lösungspolymerisation gemäß DE-OS 28 09 180.

E) Handelsübliches Polymerisat auf Basis von Methylmethacrylat, Styrol und Maleinsäureanhydrid im Gewichtsverhältnis von 75:15:10 mit einer Viskositätszahl von 70 $\pm$ 1 $cm^3$/g (gemessen nach DIN 53726 an einer 0,5 gew.-%igen Lösung in Dimethylformamid (Plexiglas® HW 55, Roehm)

F) Kondensationsprodukt aus Bisphenol A und Epichlorhydrin mit einer relativen Viskosität von 1,13, gemessen an einer 0,5 Gew.-%igen Lösung in Dichlormethan bei 25°C (Phenoxy® der Union Carbide Corporation).

Herstellung der Formmassen

(Beispiele 1 bis 8)

Die Komponenten A) bis F) wurden auf einem Zweiwellenextruder (ZSK 30 der Fa. Werner & Pfleiderer) bei 250°C und 200 Upm gemischt, als Strang ausgetragen, gekühlt und granuliert.
Die Herstellung der Probekörper erfolgte auf einer Arburg Allrounder Spritzgußmaschine bei 250°C.
Die Zusammensetzung der Formmassen ist der Tabelle 1 zu entnehmen.
Prüfung der Materialeigenschaften
Die Schlagzähigkeit und Kerbschlagzähigkeit bei Raumtemperatur und -40°C wurde nach DIN 53453/ISO 179-2 bestimmt.
Die multiaxiale Zähigkeit wurde bei Raumtemperatur und -40°C nach ISO 6603/4 bestimmt.
Die Bestimmung der Streckspannung und die Ermittlung des Elastizitätsmoduls E erfolgten jeweils nach DIN 53455.
Der Schmelzindex MVI (Melt Volume Index) wurde nach DIN 53735 bei 220°C und 10 Kilopond Belastung, 260°C und 5 Kilopond Belastung sowie bei 280°C und 5 Kilopond Belastung bestimmt.
Die Verarbeitungsstabilität wurde anhand der MVI-Werte, gemessen nach 4-minütiger Verweilzeit (Anfangswert $MVI_4$) und nach 15-minütiger Verweilzeit ($MVI_{15}$), ermittelt.

Tabelle 1

| | Bsp 1 | Bsp 2 | VBsp 3 | VBsp 4 | Bsp 5 | Bsp 6 | VBsp 7 | VBsp 8 |
|---|---|---|---|---|---|---|---|---|
| Komponente A [Gew.-%] | 30 | 30 | 30 | 30 | 56 | 56 | 56 | 56 |
| Komponente B [Gew.-%] | 18 | 18 | 18 | 18 | 18 | 18 | 18 | 18 |
| Komponente C [Gew.-%] | 9 | 9 | 9 | 9 | 9 | 9 | 9 | 9 |
| Komponente D [Gew.-%] | 43 | 43 | 43 | 43 | 17 | 17 | 17 | 17 |
| Komponente E [Gew.-%] | 1,5 | 3 | - | - | 1,5 | 3 | - | - |
| Komponente F [Gew.-%] | 1,5 | - | 3 | - | 1,5 | - | 3 | - |
| Kerbschlagzähigkeit bei 23°C [kJ/m²] | 31 | 27 | 15 | 21 | 49 | 49 | 34 | 45 |
| Kerbschlagzähigkeit bei -40°C [kJ/m²] | 17 | 16 | 8 | 15 | 11 | 11 | 3 | 11 |
| Schlagzähigkeit bei -40°C [kJ/m²] | 175 | 168 | 154 | 140 | 330 | 320 | 260 | 320 |
| Multiaxiale Zähigkeit bei 23°C [Nm] | 39 | 34 | 19 | 33 | 45 | 43 | 42 | 42 |
| Multiaxiale Zähigkeit bei -40°C [Nm] | 9 | 4 | 1 | 2 | 48 | 41 | 33 | 41 |
| MVI (220/10) [ml/10'] | 2,6 | 4,2 | 3,9 | 6,1 | 2,7 | 3,7 | 2,6 | 3,7 |
| MVI (260/5) [ml/10'] | 7,4 | 11,4 | 1 | 15,5 | 7,6 | 8,1 | 1 | 11 |
| $MVI_4$ (280/5) [ml/10'] | 25,2 | 29,5 | 23,0 | 38,7 | 20,0 | 20,2 | 9,2 | 28 |
| $MVI_{15}$ (280/5) [ml/10'] | 24,9 | 32,6 | 6,6 | 35,9 | 20,2 | 24,8 | < 0,2 | 39 |
| $MVI_{15}$-$MVI_4$ [ml/10'] | -0,3 | +3,1 | -16,4 | -2,8 | -0,2 | +4,6 | -9 | +11 |
| Streckspannung [N/mm²] | n.b. | 60 | n.b. | 58 | n.b. | 56 | n.b. | 54 |

VBsp = Vergleichsbeispiel
n.b. = nicht bestimmt

Wie aus Tabelle 1 ersichtlich ist, lassen sich durch Zugabe der an sich spröden Komponente E die mechanischen Eigenschaften, wie Zähigkeiten und Streckspannung der Formmassen bei Raumtemperatur und in der Kälte verbessern. Die Effekte sind bei Formmassen mit geringerem Polycarbonatgehalt ausgeprägter. Durch Zusatz der Komponente F) in Verbindung mit Komponente E) kann eine weitere Verbesserung der mechanischen Eigenschaften erzielt werden. Der Einsatz der Komponente F) alleine führt hingegen zu einer deutlichen Verschlechterung der Werte, selbst im Vergleich zu Formmassen ohne die Zusätze E) und F).

Bezüglich der Verarbeitungsstabilität wird deutlich, daß durch die Komponente E) bei kleineren Polycarbonatgehalten ein Molekulargewichtsaufbau des Polymeren bei der Konfektionierung (negatives $\Delta$ MVI) vermieden wird (Beispiele 1 und 2 gegenüber VBsp 4) und bei höherem Polycarbonatgehalt ein nicht erwünschter Molekulargewichtsabbau in geringerem Maße auftritt (Beispiele 5 und 6 gegenüber VBsp 8). Bei gemeinsamer Verwendung der Komponenten E) und F) werden Formmassen erhalten, deren MVI-Werte sich bei thermischer Belastung nicht mehr ändern, was als besonders vorteilhaft zu werten ist. Hingegen führt die alleinige Verwendung der Komponente F) zu einer deutlichen Verringerung des MVI-Wertes, was auf einen unerwünschten Molekulargewichtsaufbau hindeutet.

**Patentansprüche**

**1.** Thermoplastische Formmassen, enthaltend als wesentliche Komponenten,

A) 10 bis 90,9 Gew.-% mindestens eines aromatischen Polycarbonats,

B) 5 bis 30 Gew.-% mindestens eines Propfcopolymerisats, aufgebaut aus

$b_1$) 20 bis 80 Gew.-% einer Pfropfgrundlage aus wenigstens einem kautschukelastischen Polymer mit einer Glastemperatur unterhalb von 0°C und
$b_2$) 20 bis 80 Gew.-% einer Pfropfauflage mit einer Glastemperatur oberhalb 50°C, die aus zwei Monomeren $b_{21}$) und $b_{22}$) aufgebaut ist,

C) 2 bis 70 Gew.-% mindestens eines thermoplastischen Copolymerisats aus

$c_1$) 50 bis 90 Gew.-% Styrol und
$c_2$) 10 bis 50 Gew.-% Acrylnitril oder $C_1$-$C_8$-Alkyl(meth)acrylat oder deren Mischungen

mit einer Glastemperatur oberhalb von 50°C und einer Viskositätszahl im Bereich von 40 bis 160 $cm^3$/g,

D) 2 bis 70% Gew.-% eines vom Copolymer C) verschiedenen thermoplastischen Copolymerisats, das

$d_1$) 50 bis 99 Gew.-% Styrol, substituierte Styrole der allgemeinen Formel I,

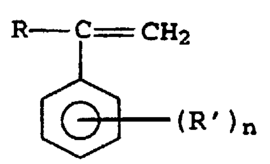

(I)

in der R für einen $C_1$-$C_8$-Alkylrest oder ein Wasserstoffatom steht, R' für einen $C_1$-$C_8$-Alkylrest steht und n den Wert 0, 1, 2 oder 3 annimmt,
oder deren Mischungen sowie

$d_2$) 1 bis 50 Gew.-% Acrylnitril, Methacrylnitril, Maleinsäureanhydrid, Maleinimid, das gegebenenfalls am Stickstoffatom eine $C_1$-$C_8$-Alkylgruppe oder $C_6$-$C_{20}$-Arylgruppe aufweist, oder $C_1$-$C_8$-Alkyl(meth)acrylat, (Meth)acrylamid, $C_1$-$C_8$-Alkylvinylether oder deren Mischungen einpolymerisiert enthält,

E) 0,1 bis 25 Gew.-% wenigstens eines Copolymerisats, aufgebaut aus

$e_1$) 50 bis 99 Gew.-% einer Mischung aus

$e_{11}$) 80 bis 100 Gew.-% mindestens eines $C_1$-$C_{10}$-Alkyl(meth)acrylats und/oder $C_5$-$C_8$-Cycloalkyl(meth)acrylats und
$e_{12}$) bis zu 20 Gew.-% mindestens eines $C_1$-$C_{10}$-Alkylacrylats,

$e_2$) 0,5 bis 20 Gew.-% Maleinsäure, Maleinsäureanhydrid, Fumarsäure, Itaconsäure oder Maleinimid, das gegebenenfalls am Stickstoff eine $C_1$-$C_8$-Alkyl- oder $C_6$-$C_{20}$-Arylgruppe aufweist, oder deren Mischungen und
$e_3$) 0,5 bis 40 Gew.-% mindestens eines Vinylaromaten, der gegebenenfalls am aromatischen Kern mit einem oder zwei $C_1$-$C_4$-Alkylresten substituiert ist, und

F) 0 bis 12,5 Gew.-% wenigstens einer polymeren, OH-Gruppen-haltigen Verbindung,

G) 0 bis 50 Gew.-% Additive, Hilfstoffe und/oder faser- oder teilchenförmige Füllstoffe oder deren Mischungen, wobei die Gewichtsanteile der Komponenten E und F zusammen maximal 25 Gew.-% ausmachen und sich die Gewichtsanteile der Komponenten A bis G zu 100 Gew.-% addieren.

**2.** Thermoplastische Formmassen nach Anspruch 1, bestehend aus der Komponente A) in einer Menge von 20 bis 86 Gew.-%, der Komponente B) in einer Menge von 5 bis 25 Gew.-%, der Komponente C) in einer Menge von 4,4 bis 70 Gew.-%, der Komponente D) in einer Menge von 4,4 bis 70 Gew.-%, der Komponente E) in einer Menge von 0,1 bis 16 Gew.-%, der Komponente F) in einer Menge von 0,1 bis 10 Gew.-%, der Komponente G) in einer Menge von 0 bis 20 Gew.-%, mit der Maßgabe, daß die Komponenten E und F zusammen maximal 20 Gew.-% ausmachen.

**3.** Thermoplastische Formmassen nach Anspruch 1 oder 2 mit einer Pfropfgrundlage $b_{1a}$) oder $b_{1b}$), wobei die Pfropfgrundlage $b_{1a}$) aus einem Copolymerisat aus

$b_{11a}$) 50 bis 100 Gew.-% Butadien und/oder Isopren und
$b_{12a}$) bis zu 50 Gew.-% copolymerisierbaren ethylenisch ungesättigten Monomeren aufgebaut ist, und

die Pfropfgrundlage $b_{1b}$) aus

$b_{11b}$) 50 bis 99,9 Gew.-% mindestens eines $C_1$-$C_{10}$-Alkylacrylats
$b_{12b}$) 0 bis 29,9 Gew.-% mindestens eines copolymerisierbaren, ethylenisch ungesättigten Monomeren und
$b_{13b}$) 0,1 bis 5 Gew.-% eines copolymerisierbaren, polyfunktionell vernetzenden Monomeren aufgebaut ist.

**4.** Thermoplastische Formmassen nach Anspruch 1 oder 2, in der die Pfropfgrundlage $b_1$ aus einem vernetzten Butadienpolymer, das bis zu 50 Gew.-% Styrol oder Acrylnitril einpolymerisiert enthält, aufgebaut ist.

**5.** Thermoplastische Formmassen nach einem der vorhergehenden Ansprüche, in denen die Pfropfauflage $b_2$) aufgebaut ist aus

$b_{21}$) 50 bis 90 Gew.-% Styrol oder substituierten Styrolen der allgemeinen Formel I und
$b_{22}$) 10 bis 50 Gew.-% Acrylnitril, Methacrylnitril, Methylmethacrylat, Maleinsäureanhydrid, Maleinimid, das gegebenenfalls am Stickstoffatom eine $C_1$-$C_8$-Alkylgruppe oder eine $C_6$-$C_{20}$-Arylgruppe aufweist, (Meth)acrylamid, $C_1$-$C_8$-Alkylvinylether oder deren Mischungen.

**6.** Thermoplastische Formmassen nach einem der vorhergehenden Ansprüche, **dadurch gekennzeichnet, daß** die Komponente B aufgebaut ist aus 20 bis 80 Gew.-% eines grobteiligen Pfropfmischpolymerisats, das eine mittlere Teilchengröße von 200 bis 700 nm ($d_{50}$-Wert der integralen Masseverteilung) aufweist und 20 bis 80 Gew.-% eines feinteiligen Pfropfmischpolymerisats, das eine mittlere Teilchengröße von 50 bis 180 nm ($d_{50}$-Wert der integralen Masseverteilung) aufweist.

**7.** Thermoplastische Formmassen nach einem der vorhergehenden Ansprüche, in der die Komponente C eine Viskositätszahl im Bereich von 50-120 $cm^3/g$ aufweist.

**8.** Thermoplastische Formmassen nach einem der vorhergehenden Ansprüche, in der es sich bei der Komponente D um ein Copolymerisat der Monomerkombinationen Styrol mit Acrylnitril und gegebenenfalls Methylmethacrylat; $\alpha$-Methylstyrol mit Acrylnitril und gegebenenfalls Methylmethacrylat; Styrol und $\alpha$-Methylstyrol mit Acrylnitril und

gegebenenfalls Methylmethacrylat; Styrol mit Maleinsäureanhydrid; Styrol mit Maleinimid, das gegebenenfalls am Stickstoffatom eine $C_1$-$C_8$-Alkyl- oder $C_6$-$C_{20}$-Arylgruppe aufweist, und gegebenenfalls Maleinsäureanhydrid, handelt.

**9.** Verwendung der thermoplastischen Formmassen aus einem der vorhergehenden Ansprüche zur Herstellung von Formkörpern, Halbzeugen oder Folien.

**10.** Formkörper, Halbzeuge oder Folien, erhältlich aus den thermoplastischen Formmassen der Ansprüche 1 bis 8.

**Claims**

**1.** A thermoplastic molding material containing, as essential components,

A) from 10 to 90.9 % by weight of at least one aromatic polycarbonate,

B) from 5 to 30 % by weight of at least one graft copolymer which is composed of

$b_1$) from 20 to 80 % by weight of a grafting base of at least one elastomeric polymer having a glass transition temperature below 0°C and
$b_2$) from 20 to 80 % by weight of a graft layer which has a glass transition temperature above 50°C and is composed of two monomers $b_{21}$) and $b_{22}$),

C) from 2 to 70 % by weight of at least one thermoplastic copolymer of

$c_1$) from 50 to 90 % by weight of styrene and
$c_2$) from 10 to 50 % by weight of acrylonitrile, $C_1$-$C_8$-alkyl (meth)acrylate or a mixture thereof,

having a glass transition temperature above 50°C and a viscosity number of from 40 to 160 $cm^3/g$,

D) from 2 to 70 % by weight of a thermoplastic copolymer which differs from the copolymer C) and contains, as polymerized units,

$d_1$) from 50 to 99 % by weight of styrene, substituted styrenes of the formula I

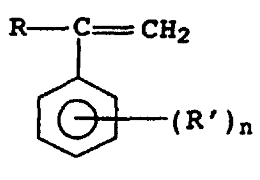

(I)

where R is $C_1$-$C_8$-alkyl or hydrogen, R' is $C_1$-$C_8$-alkyl and n is 0, 1, 2 or 3,
or a mixture thereof and

$d_2$) from 1 to 50 % by weight of acrylonitrile, methacrylonitrile, maleic anhydride, maleimide, which may have the $C_1$-$C_8$-alkyl group or $C_6$-$C_{20}$-aryl group on the nitrogen atom, $C_1$-$C_8$-alkyl (meth)acrylate, (meth) acrylamide, $C_1$-$C_8$-alkyl vinyl ether or a mixture thereof,

E) from 0.1 to 25 % by weight of at least one copolymer, composed of

$e_1$) from 50 to 99 % by weight of a mixture of

$e_{11}$) from 80 to 100 % by weight of at least one $C_1$-$C_{10}$-alkyl(meth)acrylate or $C_5$-$C_8$-cycloalkyl (meth) acrylate and
$e_{12}$) up to 20 % by weight of at least one $C_1$-$C_{10}$-alkyl acrylate,

$e_2$) from 0.5 to 20 % by weight of maleic acid, maleic anhydride, fumaric acid, itaconic acid or maleimide,

which may have a $C_1$-$C_8$-alkyl group or $C_6$-$C_{20}$-aryl group on the nitrogen atom, or a mixture thereof and $e_3$) from 0.5 to 40 % by weight of at least one vinylaromatic which is unsubstituted or substituted on the aromatic nucleus by one or two $C_1$-$C_4$-alkyl radicals,

F) from 0 to 12.5 % by weight of at least one polymeric, OH-containing compound and

G) from 0 to 50 % by weight of additives, assistants or fibrous or particulate fillers or a mixture thereof, the amounts by weight of component E and F together accounting for not more than 25 % by weight and the amounts by weight of the components A to G summing to 100 % by weight.

**2.** A thermoplastic molding material as claimed in claim 1, consisting of

the component A) in an amount of from 20 to 86 % by weight,
the component B) in an amount of from 5 to 25 % by weight,
the component C) in an amount of from 4.4 to 70 % by weight,
the component D) in an amount of from 4.4 to 70 % by weight,
the component E) in an amount of from 0.1 to 16 % by weight,
the component F) in an amount of from 0.1 to 10 % by weight,
the component G) in an amount of from 0 to 20 % by weight,

with the proviso that the components E and F together account for not more than 20 % by weight.

**3.** A thermoplastic molding material as claimed in claim 1 or 2, having a grafting base $b_{1a}$) or $b_{1b}$), wherein the grafting base $b_{1a}$) is composed of a copolymer of

$b_{11a}$) from 50 to 100 % by weight of butadiene or isoprene and
$b_{12a}$) up to 50 % by weight of copolymerizable ethylenically unsaturated monomers, and

the grafting base $b_{1b}$) is composed of

$b_{11b}$) from 50 to 99.9 % by weight of at least one $C_1$-$C_{10}$-alkyl acrylate,
$b_{12b}$) from 0 to 29.9 % by weight of at least one copolymerizable, ethylenically unsaturated monomer and
$b_{13b}$) from 0.1 to 5 % by weight of a copolymerizable, polyfunctionally crosslinking monomer.

**4.** A thermoplastic molding material as claimed in claim 1 or 2, in which the grafting base $b_1$ is composed of a crosslinked butadiene polymer which contains up to 50 % by weight of styrene or acrylonitrile as polymerized units.

**5.** A thermoplastic molding material as claimed in any of the preceding claims, in which the graft layer $b_2$) is composed of

$b_{21}$) from 50 to 90 % by weight of styrene or substituted styrenes of the formula I and
$b_{22}$) from 10 to 50 % by weight of acrylonitrile, methacrylonitrile, methyl methacrylate, maleic anhydride, maleimide which may have a $C_1$-$C_8$-alkyl group or a $C_6$-$C_{20}$-aryl group on the nitrogen atom, (meth)acrylamide, $C_1$-$C_8$-alkyl vinyl ether or mixtures thereof.

**6.** A thermoplastic molding material as claimed in any of the preceding claims, wherein the component B is composed of from 20 to 80 % by weight of a coarse-particled graft copolymer which has an average particle size of from 200 to 700 nm ($d_{50}$ value of the integral mass distribution) and from 20 to 80 % by weight of a fine-particled graft copolymer which has an average particle size of from 50 to 180 nm ($d_{50}$ value of the integral mass distribution).

**7.** A thermoplastic molding material as claimed in any of the preceding claims, in which the component C has a viscosity number of 50-120 $cm^3/g$.

**8.** A thermoplastic molding material as claimed in any of the preceding claims, in which the component D is a copolymer of the monomer combinations styrene with acrylonitrile and, if required, methyl methacrylate; $\alpha$-methylstyrene with acrylonitrile and, if required, methyl methacrylate; styrene and $\alpha$-methylstyrene with acrylonitrile and, if required, methyl methacrylate; styrene with maleic anhydride; styrene with maleimide, which may have a $C_1$-$C_8$-alkyl or $C_6$-$C_{20}$-aryl group on the nitrogen atom, and, if required, maleic anhydride.

**9.** The use of a thermoplastic molding material from any of the preceding claims for the production of moldings, semifinished products or films.

**10.** A molding, semifinished product or film obtainable from a thermoplastic molding material as claimed in any of claims 1 to 8.

**Revendications**

**1.** Masses de moulage thermoplastiques, contenant comme principaux constituants

A) de 10 à 90,9% en poids d'au moins un polycarbonate aromatique,
B) de 5 à 30% en poids d'au moins un copolymère greffé constitué de

$b_1$) 20 à 80% en poids d'une base de greffage composée d'au moins un polymère à élasticité de caoutchouc présentant une température de transition vitreuse inférieure à 0°C et
$b_2$) 20 à 80% en poids d'une enveloppe de greffage présentant une température de transition vitreuse supérieure à 50°C, constituée de deux monomères $b_{21}$) et $b_{22}$),

C) 2 à 70% en poids d'au moins un copolymère thermoplastique constitué de

$c_1$) 50 à 90% en poids de styrène et
$c_2$) 10 à 50% en poids d'acrylonitrile ou de (méth)acrylate d'alkyle en $C_1$ à $C_8$, ou leurs mélanges,

avec une température de transition vitreuse supérieure à 50°C et un indice de viscosité de l'ordre de 40 à 160 $cm^3/g$,
D) 2 à 70% en poids d'un copolymère thermoplastique différent du copolymère C), qui contient

$d_1$) 50 à 99% en poids de styrène, de styrènes substitués de la formule générale I,

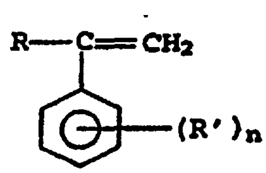

(I)

dans laquelle R représente un reste alkyle en $C_1$ à $C_8$ ou un atome d'hydrogène, R' un reste alkyle en $C_1$ à $C_8$, et n adopte une valeur de 0, 1 ou 2,
ou leurs mélanges, ainsi que
$d_2$) 1 à 50% en poids d'acrylonitrile, de méthacrylonitrile, d'anhydride maléique, d'imide maléique, présentant éventuellement sur l'atome d'azote un groupe alkyle en $C_1$ à $C_8$ ou un groupe aryle en $C_6$ à $C_{20}$, ou (méth)acrylate d'alkyle en $C_1$ à $C_8$, (méth)acrylamide, vinyléther d'alkyle en $C_1$ à $C_8$, ou leurs mélanges, sous forme copolymérisée,

E) 0,1 à 25% en poids d'au moins un copolymère constitué de

$e_1$) 50 à 99% en poids d'un mélange constitué de

$e_{11}$) 80 à 100% en poids d'au moins un (méth)acrylate d'alkyle en $C_1$ à $C_{10}$ et / ou (méth)acrylate de cycloalkyle en $C_5$ à $C_8$ et
$e_{12}$) jusqu'à 20% en poids d'au moins un acrylate d'alkyle en $C_1$ à $C_{10}$,

$e_2$) 0,5 à 20% en poids d'acide maléique, d'anhydride maléique, d'acide fumarique, d'acide itaconique ou d'imide maléique, présentant éventuellement sur l'atome d'azote un groupe alkyle en $C_1$ à $C_8$ ou aryle en $C_6$ à $C_{20}$, ou leurs mélanges, et
$e_3$) 0,5 à 40% en poids d'au moins un vinylaromatique, qui est éventuellement substitué sur le noyau aromatique par un ou deux restes alkyle en $C_1$ à $C_4$, et

F) 0 à 12,5% en poids d'au moins un composé polymère contenant des groupes OH,
G) 0 à 50% en poids d'additifs, adjuvants et / ou matières de remplissage fibreuses ou particulaires, les fractions pondérales des composants E et F totalisant ensemble un maximum de 25% en poids et les fractions pondérales des composants A à G constituant le complément à 100% en poids.

**2.** Masses de moulage thermoplastiques selon la revendication 1, constituées:

du composant A) en une quantité de 20 à 86% en poids;
du composant B) en une quantité de 5 à 25% en poids,
du composant C) en une quantité de 4,4 à 70% en poids,
du composant D) en une quantité de 4,4 à 70% en poids,
du composant E) en une quantité de 0,1 à 16% en poids,
du composant F) en une quantité de 0,1 à 10% en poids,
du composant G) en une quantité de 0 à 20% en poids,

avec la condition que les composants E et F représentent ensemble un maximum de 20% en poids.

**3.** Masses de moulage thermoplastiques selon la revendication 1 ou 2, avec une base de greffage $b_{1a}$) ou $b_{1b}$), où la base de greffage $b_{1a}$) est constituée de

$b_{11a}$) 50 à 100% en poids de butadiène et/ou d'isoprène et
$b_{12a}$) jusqu'à 50% en poids de monomères éthyléniquement insaturés copolymérisables, et

la base de greffage $b_{1b}$) est constituée de

$b_{11b}$) 50 à 99,9% en poids d'au moins un acrylate d'alkyle en $C_1$ à $C_{10}$,
$b_{12b}$ 0 à 29,9% en poids d'au moins un monomère éthyléniquement insaturé copolymérisable et
$b_{13b}$) 0,1 à 5% en poids d'un monomère réticulant polyfonctionnel copolymérisable.

**4.** Masses de moulage thermoplastiques selon la revendication 1 ou 2, dans lesquelles la base de greffage $b_1$ est constituée d'un polymère de butadiène réticulé, qui contient jusqu'à 50% en poids de styrène ou d'acrylonitrile copolymérisés.

**5.** Masses de moulage thermoplastiques selon l'une des revendications qui précèdent, dans lesquelles l'enveloppe de greffage $b_2$) est constituée de

$b_{21}$) 50 à 90% en poids de styrène ou de styrènes substitués de la formule générale I et
$b_{22}$) 10 à 50% en poids d'acrylonitrile, de méthacrylonitrile, de méthacrylate de méthyle, d'anhydride maléique, d'imide maléique, présentant éventuellement sur l'atome d'azote un groupe alkyle en $C_1$ à $C_8$ ou un groupe aryle en $C_6$ à $C_{20}$, de méthacrylamide, de vinyléther d'alkyle en $C_1$ à $C_8$, ou leurs mélanges.

**6.** Masses de moulage thermoplastiques selon l'une des revendications qui précèdent, **caractérisées en ce que** le composant B est constitué de 20 à 80% en poids d'un copolymère greffé à grosses particules, présentant une taille moyenne de particules de 200 à 700 nm (valeur $d_{50}$ de la distribution massique intégrale) et de 20 à 80% en poids d'un copolymère greffé finement divisé présentant une taille moyenne de particules de 50 à 180 nm (valeur $d_{50}$ de la distribution massique intégrale).

**7.** Masses de moulage thermoplastiques selon l'une des revendications qui précèdent, dans lesquelles le composant C présente un indice de viscosité de l'ordre de 50 à 120 $cm^3/g$.

**8.** Masses de moulage thermoplastiques selon l'une des revendications qui précèdent, dans lesquelles le composant D est un copolymère des combinaisons de monomères de styrène et d'acrylonitrile et éventuellement méthacrylate de méthyle, $\alpha$ -méthylstyrène et acrylonitrile et éventuellement méthacrylate de méthyle, styrène et $\alpha$-méthylstyrène avec de l'acrylonitrile et éventuellement du méthacrylate de méthyle, styrène et anhydride maléique, styrène et imide maléique, présentant éventuellement sur l'atome d'azote un groupe alkyle en $C_1$ à $C_8$ ou aryle en $C_6$ à $C_{20}$, et éventuellement anhydride maléique.

**9.** Utilisation des masses de moulage thermoplastiques selon l'une des revendications qui précèdent pour la préparation de corps façonnés, de demi-produits ou de feuilles.

**10.** Corps façonnés, demi-produits ou feuilles que l'on peut obtenir à partir des masses de moulage thermoplastiques selon les revendications 1 à 8.